# EUROPEAN PATENT APPLICATION

(11) **EP 4 095 990 A1**
(43) Date of publication of application: **30.11.2022**
(21) Application number: 21821659.6
(22) Date of filing: 27.05.2021
(51) Int. Cl.: H01M 50/116, H01M 50/124, H01M 50/502, H01M 50/543, H01M 50/209, H01M 10/48

(54) **BATTERY CELL, BATTERY PACK, AND ELECTRONIC DEVICE**

(30) Priority: 12.06.2020 KR 20200071792
(71) Applicant: LG Energy Solution, Ltd., Seoul 07335 (KR)
(72) Inventor: JANG, Ji-Uk, Daejeon 34122 (KR)
(74) Representative: Plasseraud IP
(86) International application number: PCT/KR2021/095064
(87) International publication number: WO 2021/251805

(57) **Abstract**

The present disclosure relates to a battery cell, a battery pack and an electronic device with improved durability by reducing bend-induced damage. To achieve the above-described object, a battery cell according to the present disclosure includes at least two battery units, each including a plurality of electrode leads, an electrode assembly, an electrolyte solution and an inner pouch in which the electrode assembly and the electrolyte solution are received, wherein at least one of the plurality of electrode leads of one battery unit is inserted into the other battery unit and electrically connected to the electrode assembly, and an outer pouch including at least two receiving portions in which the at least two battery units are received respectively, and a bending portion in which a part of the plurality of electrode leads is disposed and a part between the at least two receiving portions is bent.

## Description

### TECHNICAL FIELD

The present disclosure relates to a battery cell, a battery pack and an electronic device, and more particularly, to a battery cell, a battery pack and an electronic device with improved durability by reducing bend-induced damage.

The present application claims the benefit of Korean Patent Application No. 10-2020-0071792 filed on June 12, 2020 with the Korean Intellectual Property Office, the disclosure of which is incorporated herein by reference in its entirety.

### BACKGROUND ART

Recently, with the rapid increase in demand for portable electronic products such as laptop computers, video cameras and mobile phones and the extensive development of electric vehicles, accumulators for energy storage, robots and satellites, many studies are being made on high performance secondary batteries that can be repeatedly recharged.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

A lithium secondary battery primarily uses a lithium-based oxide and a carbon material as a positive electrode active material and a negative electrode active material respectively. Additionally, the lithium secondary battery includes an electrode assembly including a positive electrode plate and a negative electrode plate coated with the positive electrode active material and the negative electrode active material respectively with a separator interposed between the positive electrode plate and the negative electrode plate, and a packaging or a battery case in which the electrode assembly is hermetically received together with an electrolyte solution.

Additionally, lithium secondary batteries may be classified into can-type secondary batteries including the electrode assembly embedded in a metal can and pouchtype secondary batteries including the electrode assembly embedded in a pouch of an aluminum laminate sheet according to the shape of the packaging.

Recently, mobile electronic devices of bendable shape are released. To avoid mechanical damage of battery cells or battery packs mounted on the electronic device due to bending, it is unavoidable to apply at least two battery cells or battery packs separated from each other to avoid the bent region.

Accordingly, the mobile electronic device needs to include at least two protection circuit modules in its narrow internal space to control the charge/discharge of the battery cells. Since small battery cells are mounted in the narrow internal space, there is a significant reduction in the battery capacity of the electronic device. The short service life of the electronic device causes inconvenience to customers.

Further, there are the following limitations in reducing the size of the battery cell. In the case of a stack & folding type electrode assembly of the battery cell, as the width of the electrode assembly is narrower, the folding operation of the electrode plates is longer, resulting in increased manufacturing time and material cost. Furthermore, the width size reduction leads to a small interval between the electrode leads of the battery cell, causing a short circuit of the electrode lead, which makes fabrication difficult.

### DISCLOSURE

### Technical Problem

The present disclosure is designed to solve the above-described problem, and therefore the present disclosure is directed to providing a battery cell, a battery pack and an electronic device with improved durability by reducing bend-induced damage.

These and other objects and advantages of the present disclosure may be understood by the following description, and will be apparent from the embodiments of the present disclosure. In addition, it will be readily appreciated that the objects and advantages of the present disclosure may be realized by means and combinations thereof.

### Technical Solution

To achieve the above-described object, a battery cell according to the present disclosure includes at least two battery units, each including a plurality of electrode leads, an electrode assembly, an electrolyte solution and an inner pouch in which the electrode assembly and the electrolyte solution are received, wherein at least one of the plurality of electrode leads of one battery unit is inserted into the other battery unit and electrically connected to the electrode assembly, and an outer pouch including at least two receiving portions in which the at least two battery units are received respectively, and a bending portion in which a part of the plurality of electrode leads is disposed and a part between the at least two receiving portions is bent.

Additionally, the bending portion may have a sealing region in which at least part of the bending portion is sealed, and the bending portion may be configured to bend at the sealing region.

Furthermore, the bending portion may have a non-sealing region not sealed from one end of the outer pouch to the other end, and the non-sealing region may be configured to bend.

Additionally, the sealing region or the non-sealing region of the bending portion may have a bending structure bent at least two times.

Further, the electrode lead disposed at the bending portion may include a multi-bent portions bent at least two times.

Additionally, the plurality of electrode leads may include a positive electrode lead and a negative electrode lead, any one of the positive electrode lead and the negative electrode lead of one battery unit may be electrically connected to any one of the positive electrode and the negative electrode of the other battery unit, the remaining one may extend outward from the other battery unit and protrudes outward from the outer pouch, both the positive electrode lead and the negative electrode lead of the other battery unit may protrude outward from the outer pouch, and one of the positive electrode lead and the negative electrode lead of the other battery unit may be configured to sense a voltage of one battery unit.

Furthermore, the electrode leads protruding outward from the outer pouch of each of the at least two battery units may be arranged side by side.

Additionally, to achieve the above-described object, a battery pack of the present disclosure at least one battery cell, and further includes a protection circuit module electrically connected to the at least one battery cell.

Additionally, to achieve the above-described object, an electronic device according to the present disclosure includes at least one battery pack.

Furthermore, the electronic device may further include an outer case to accommodate the battery pack and configured to bend along the bending portion.

### Advantageous Effects

According to an aspect of the present disclosure, the battery cell of the present disclosure includes the at least two battery units including the inner pouch and the outer pouch, so the internal components of the battery cell may be double-sealed by the inner pouch and the outer pouch, thereby preventing the internal components of the inner pouch from being forced out when the outer pouch is damaged by the frequent bends of the bending portion. Accordingly, it is possible to significantly increase the stability of the battery cell.

Further, in the battery cell of the present disclosure, at least one of the plurality of electrode leads of one battery unit is inserted into the other battery unit and electrically connected to the electrode assembly, so it is possible to eliminate the need for a separate connection member for electrical connection between the plurality of battery units, thereby saving the material cost, and reduce the number of welding between the components, thereby saving the manufacturing cost.

Additionally, according to another aspect of the present disclosure, the battery cell of the present disclosure includes the bending portion configured to bend along the non-sealing region, thereby effectively reducing pouch damage caused by the frequent bends of the bending portion. That is, as opposed to the sealing region, the non-sealing region of the outer pouch does not have an increase in crystallization by thermal welding and thus is relatively flexible. Accordingly, the non-sealing region may have less crack or break of the outer pouch caused by frequent bends.

Furthermore, according to another aspect of the present disclosure, the battery cell of the present disclosure has the bent structure bent at least two times at the sealing region or the non-sealing region of the bending portion, and thus the bending portion has the already formed bent structure, to guide the battery cell to bend in the intended direction and location. Further, in case that a part of the outer case is bent many number of times without an already formed bent structure as conventionally, stress may focus on a certain region or fatigue may accumulate at a certain region, causing early damage, which notably degrades the durability of the outer pouch. However, the battery cell of the present disclosure may disperse stress and fatigue generated when bending the outer pouch to the plurality of bent structures, thereby effectively increasing the durability of the outer pouch.

### BRIEF DESCRIPTION OF THE DRAWINGS

The accompanying drawings illustrate the preferred embodiments of the present disclosure, and together with the following detailed description, serve to provide a further understanding of the technical aspect of the present disclosure. However, the present disclosure should not be construed as being limited to the drawings.
FIG. 1 is a schematic perspective view of a battery cell according to an embodiment of the present disclosure.
FIG. 2 is a schematic exploded perspective view of the components of a battery cell according to an embodiment of the present disclosure.
FIG. 3 is a schematic cross-sectional view of the internal components of a battery cell according to an embodiment of the present disclosure.
FIG. 4 is a schematic cross-sectional view of two battery units of FIG. 3.
FIG. 5 is a schematic perspective view of a bent battery cell according to an embodiment of the present disclosure.
FIG. 6 is a schematic exploded perspective view of the components of an outer pouch of a battery cell according to another embodiment of the present disclosure.
FIG. 7 is a schematic partial side view of a battery cell according to another embodiment of the present disclosure.
FIG. 8 is a schematic partial side view of a battery cell according to still another embodiment of the present disclosure.
FIG. 9 is a schematic perspective view of the components of a battery cell according to another embodiment of the present disclosure.
FIG. 10 is a schematic exploded perspective view of the components of the battery cell of FIG. 9.
FIG. 11 is a schematic bottom view of a battery pack according to an embodiment of the present disclosure.
FIG. 12 is a schematic perspective view of an electronic device according to an embodiment of the present disclosure.

### DETAILED DESCRIPTION

Hereinafter, the preferred embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspects of the present disclosure on the basis of the principle that the inventor is allowed to define the terms appropriately for the best explanation.

Therefore, the embodiments described herein and the illustrations shown in the drawings are just a most preferred embodiment of the present disclosure, but not intended to fully describe the technical aspects of the present disclosure, so it should be understood that a variety of other equivalents and modifications could have been made thereto at the time that the application was filed.

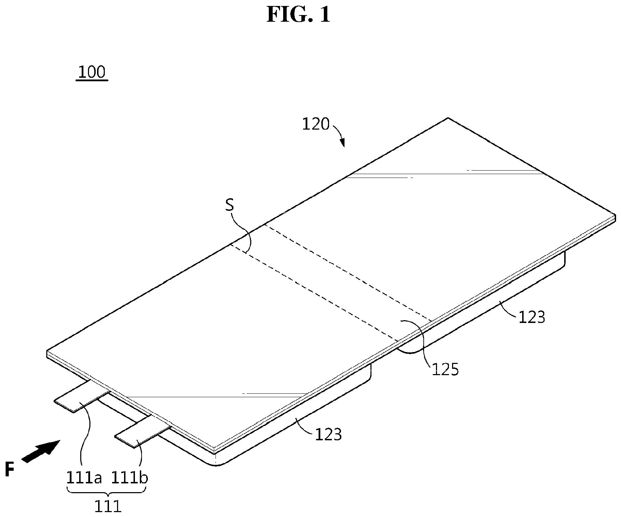

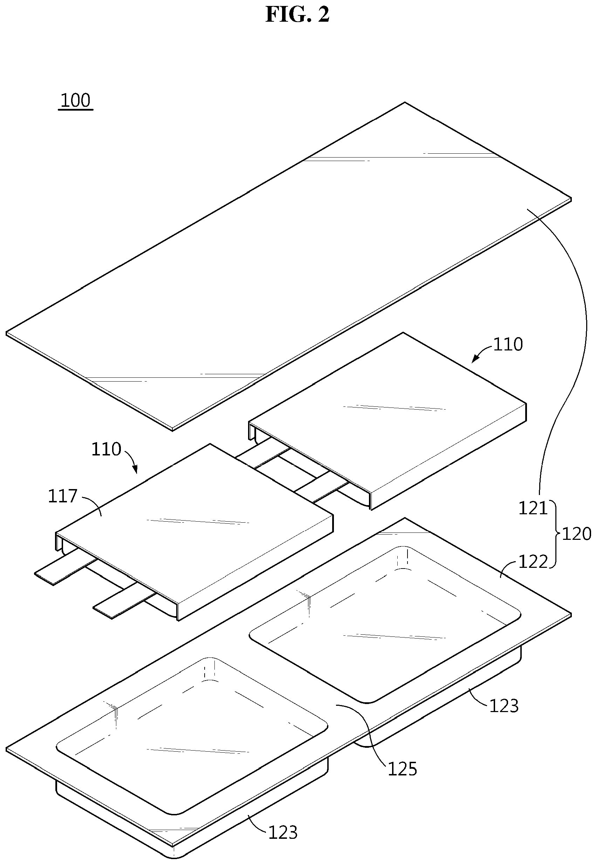

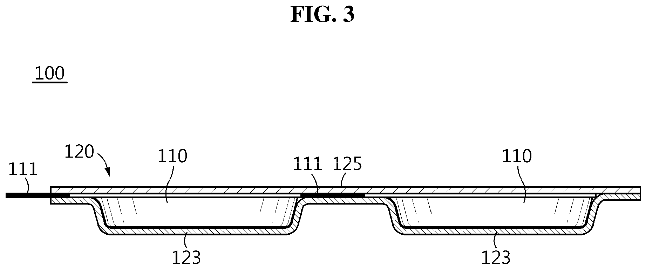

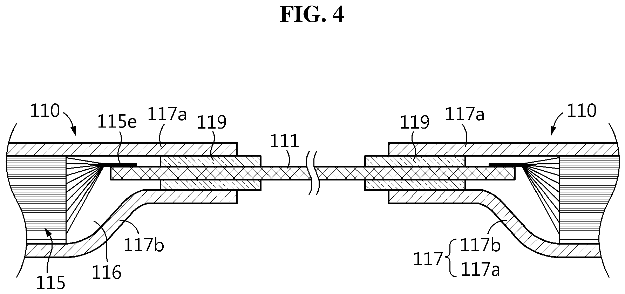

FIG. 1 is a schematic perspective view of a battery cell according to an embodiment of the present disclosure. FIG. 2 is a schematic exploded perspective view of the components of the battery cell according to an embodiment of the present disclosure. FIG. 3 is a schematic cross-sectional view of the internal components of the battery cell according to an embodiment of the present disclosure. FIG. 4 is a schematic cross-sectional view of two battery units of FIG. 3.

Referring to FIGS. 1 to 4, the battery cell 100 according to an embodiment of the present disclosure includes at least two battery units 110 and an outer pouch 120.

Specifically, each of the at least two battery units 110 includes a plurality of electrode leads 111, an electrode assembly 115, an electrolyte solution 116 and an inner pouch 117.

First, the electrode assembly 115 may include a plurality of electrode plates and a plurality of separators interposed between the plurality of electrode plates. Each of the electrode plates may include an electrode tab, and the plurality of electrode tabs may be stacked and welded to form an electrode tab stack 115e. Additionally, the electrode tab stack 115e and the electrode lead 111 may be electrically connected.

Additionally, each of the electrode plates may include the electrode assembly and an electrode active material coated on the surface of the electrode assembly. For example, the electrode plate may include a positive electrode plate and a negative electrode plate. The positive electrode plate includes a positive electrode current collector and a positive electrode active material layer formed on at least one surface of the positive electrode current collector, and the negative electrode plate includes a negative electrode current collector and a negative electrode active material layer formed on at least one surface of the negative electrode current collector. The electrode plate may have an uncoated region having no electrode active material at the edges.

Furthermore, the separator may include polyethylene, polypropylene and polyethyleneterephthalate.

Additionally, the electrolyte solution 116 may be a non-aqueous electrolyte solution. An organic solvent included in the non-aqueous electrolyte solution may include, but is not limited to, organic solvents commonly used in the electrolyte solution 116 for a lithium secondary battery, and the organic solvent may include, for example, at least one of ether, ester, amide, linear carbonate or cyclic carbonate. The electrolyte solution 116 may include a lithium salt.

Further, the electrode lead 111 is not limited to a particular type, and may include those made of materials capable of electrically connecting the electrode tabs, and preferably, a metal plate. Examples of the metal plate include an aluminum plate, a copper plate, a nickel plate and a nickel-coated copper plate.

Furthermore, the electrode lead 111 may include a negative electrode lead 111b connected to the negative electrode plate and a positive electrode lead 111a connected to the positive electrode plate.

Additionally, the inner pouch 117 may be received in an internal space in which the electrode assembly 115 and the electrolyte solution 116 are received. Specifically, the inner pouch 117 may be formed from a laminate sheet including a metal layer and a resin layer. In particular, the metal layer may include aluminum. The inner pouch 117 may include a core made of a metal layer, a hot melt layer formed on an upper surface of the core, and an insulating layer formed on a lower surface of the core. However, the inner pouch 117 of the present disclosure does not necessarily include the metal layer, and the inner pouch 117 may only include the hot melt layer and the insulating layer.

Here, the hot melt layer may act as an adhesive layer using polymer resin such as modified polypropylene, for example, Casted Polypropylene (CPP), and the insulating layer may be formed from nylon or resin such as polyethylene terephthalate (PET), but the structure and material of the pouch packaging material is not limited thereto.

Furthermore, the inner pouch 117 may be hermetically sealed to prevent an external material from entering. For example, the inner pouch 117 may include an upper sheet 117a and a lower sheet 117b having an internal space in which the electrode assembly 115 and the electrolyte solution 116 are received. The upper sheet 117a and the lower sheet 117b may be stacked and thermally welded along the outer periphery.

Additionally, the electrode lead 111 may be interposed between the upper sheet 117a and the lower sheet 117b of the inner pouch 117. In this instance, to increase the coupling strength and sealability of the part of the inner pouch 117 at which the electrode lead 111 is placed, a film 119 configured to cover at least part of the outer surface of the electrode lead 111 may be additionally provided.

Additionally, at least one of the plurality of electrode leads 111 of one of the at least two battery units 110 may be inserted into the other battery unit 110. For example, as shown in FIGS. 2 and 3, when viewed from the direction F of FIG. 1, the positive electrode lead 111a and the negative electrode lead 111b of the rear battery unit 110 may be inserted into the front battery unit 110.

Meanwhile, the terms indicating directions as used herein such as front, rear, left, right, upper and lower may change depending on the position of an observer or the placement of the stated element. However, for convenience of description, the front, rear, left, right, upper and lower directions are distinguished with respect to the viewing direction F.

Further, the electrode lead 111 inserted into the other battery unit 110 may be electrically connected to the electrode assembly 115 of the other battery unit 110. For example, as shown in FIGS. 2 and 4, the positive electrode lead 111a and the negative electrode lead 111b of the rear battery unit 110 may be connected to the positive electrode tab stack (not shown) and the negative electrode tab stack 115e provided in the electrode assembly 115 of the front battery unit 110 respectively. That is, the battery cell 100 according to an embodiment of the present disclosure may include the at least two battery units 110 electrically connected in parallel.

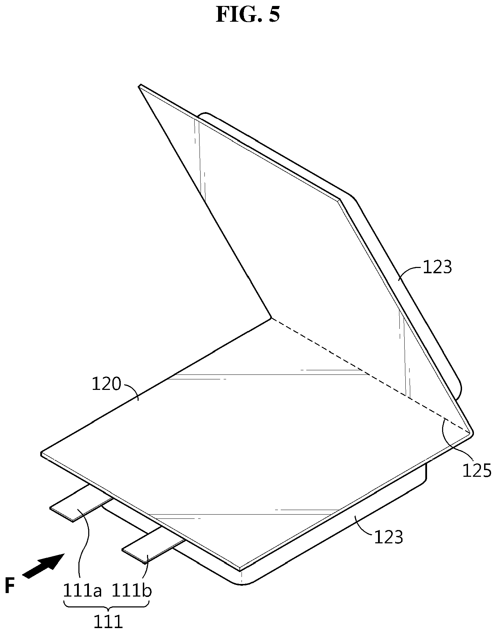

FIG. 5 is a schematic perspective view of the bent battery cell according to an embodiment of the present disclosure.

Referring to FIG. 5 together with FIGS. 1 to 3, the outer pouch 120 may include an upper cover 121 and a lower cover 122. The lower cover 122 may include at least two receiving portions 123 in which the at least two battery units 110 are received respectively. The receiving portion 123 may have an internal space to accommodate the battery unit 110. The outer pouch 120 may be sealed along the horizontal outer periphery. For example, the upper cover 121 and the lower cover 122 may be stacked and thermally welded along the outer periphery except their receiving portions 123.

Additionally, the outer pouch 120 may include a bending portion 125 (the dotted region in FIG. 1). The bending portion 125 may be a part between the receiving portions 123 disposed in the front-rear direction. At least part of the bending portion 125 may be configured to bend. Parts of the plurality of electrode leads 111 may be disposed at the bending portion 125. For example, as shown in FIGS. 2 and 3, the positive electrode lead 111a and the negative electrode lead 111b of the rear battery unit 110 may be disposed at the bending portion 125 between the upper cover 121 and the lower cover 122.

According to this configuration of the present disclosure, the battery cell 100 of the present disclosure includes the at least two battery units 110 including the inner pouch 117 and the outer pouch 120, so the internal components of the battery cell 100 may be double-sealed by the inner pouch 117 and the outer pouch 120, thereby preventing the internal components of the inner pouch from being forced out when the outer pouch is damaged by the frequent bends of the bending portion 125. Accordingly, it is possible to significantly increase the stability of the battery cell.

Further, in the battery cell 100 of the present disclosure, at least one of the plurality of electrode leads 111 of one battery unit 110 is inserted into the other battery unit 110 and electrically connected to the electrode assembly 115, so it is possible to eliminate the need for a separate connection member for electrical connection between the plurality of battery units 110, thereby saving the material cost, and reduce the number of welding between the components, thereby saving the manufacturing cost.

Meanwhile, referring back to FIGS. 1 to 5, at least part of the bending portion 125 may have a sealing region S. The bending portion 125 may be configured to bend at the sealing region S (the dotted region). For example, as shown in FIG. 5, the bending portion 125 may be configured such that the sealing region S at which the upper cover 121 and the lower cover 122 are welded is bent in a direction opposite to the direction in which the receiving portion 123 is disposed.

According to this configuration of the present disclosure, the battery cell 100 of the present disclosure makes use of the existing sealing region S as the bending portion 125 without a separate region for bending by bending the sealing region S of the bending portion 125, thereby increasing the space utility. Accordingly, it is possible to effectively increase the energy density of the battery cell 100.

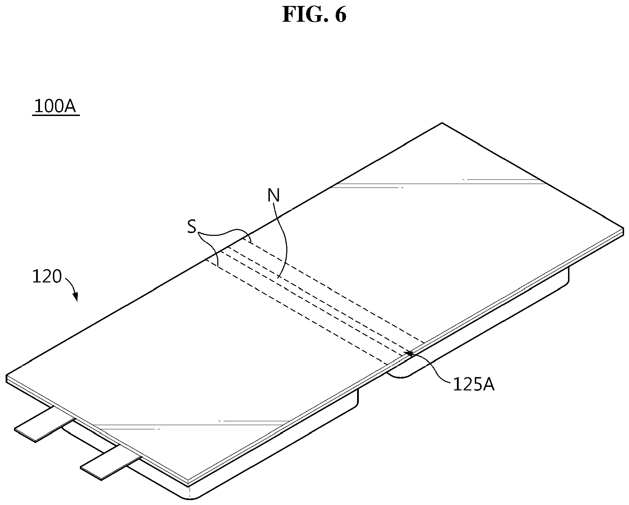

FIG. 6 is a schematic exploded perspective view of the components of an outer pouch of a battery cell according to another embodiment of the present disclosure.

Referring to FIG. 6, the battery cell 100A according to another embodiment may have a non-sealing region N at which the bending portion 125A of the outer pouch 120 is not sealed from one end of the outer pouch 120 from the other end. That is, the non-sealing region N may be where the upper cover 121 and the lower cover 122 are not thermally welded and are separated from each other. For example, when viewed from the direction F, the bending portion 125A may be disposed between the receiving portions 123 in which the rear battery unit 110 and the front battery unit 110 are received respectively. The bending portion 125A may have the sealing region S and the non-sealing region N. The non-sealing region N may have a strip shape extending from the left end of the outer pouch 120 to the right end. Additionally, the sealing region S may be disposed at the bending portion 125A in the front-rear direction of the non-sealing region N.

Additionally, the bending portion 125A may be configured to bend at the non-sealing region N. That is, the battery cell 100A may bend along the non-sealing region N extending in the horizontal direction of the bending portion 125A. In other words, the battery cell 100A is said to be bent along the horizontal rotation axis disposed at the bending portion 125A.

According to this configuration of the present disclosure, the battery cell 100A according to another embodiment of the present disclosure includes the bending portion 125A configured to bend along the non-sealing region N, thereby effectively reducing pouch damage caused by the frequent bends of the bending portion 125A. That is, as opposed to the sealing region S, the non-sealing region N of the outer pouch 120 does not have an increase in crystallization by thermal welding and thus is relatively flexible. Accordingly, the non-sealing region N may have less crack or break of the outer pouch 120 caused by frequent bends.

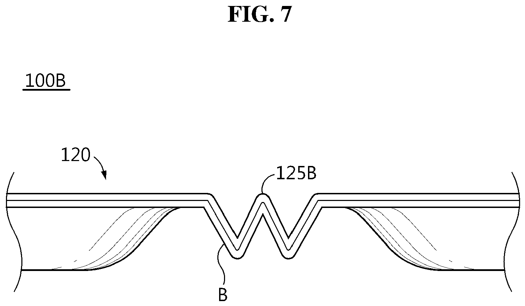

FIG. 7 is a schematic partial side view of the battery cell according to another embodiment of the present disclosure.

Referring to FIG. 7 together with FIGS. 3 and 6, the battery cell 100B according to another embodiment of the present disclosure may include the bending portion 125B and the sealing region S in the same way as the battery cell 100 of FIG. 1, or may include the sealing region S and the non-sealing region N in the same way as the battery cell 100A of FIG. 6. The sealing region S or the non-sealing region N may have a bent structure B bent at least two times. For example, as shown in FIG. 7, the bending portion 125B may have a structure in which it is bent down, the downward bent end is bent up, the upward bent end is bent down again, and the downward bent end is bent up again. That is, the bent structure B may have a shape of the letter 'W' when viewed from the side.

According to this configuration of the present disclosure, the battery cell 100B of the present disclosure has the bent structure B bent at least two times at the sealing region S or the non-sealing region N of the bending portion 125B, and thus the bending portion 125B has the already formed bent structure B, to guide the battery cell 100B to bend in the intended direction and location. Further, in case that a part of the outer case is bent many number of times without an already formed bent structure as conventionally, stress may focus on a certain region or fatigue may accumulate at a certain region, causing early damage, which notably degrades the durability of the outer pouch 120. However, the battery cell 100B of the present disclosure may disperse stress and fatigue generated when bending the outer pouch 120 to the plurality of bent structures B, thereby effectively increasing the durability of the outer pouch 120.

Further, the bending portion of the battery cell 100B of the present disclosure includes the outer pouch 120 which may be bent along the already formed bent structure B, so it is possible to bend the outer pouch 120 with a small force, and reduce deformation of the outer pouch 120 caused by bending.

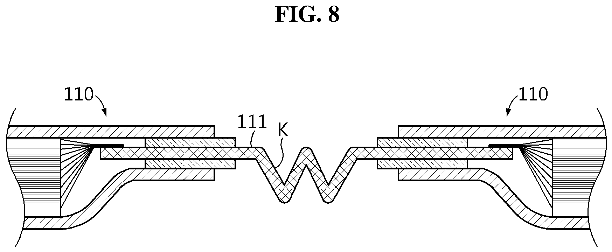

FIG. 8 is a schematic partial side view of a battery cell according to still another embodiment of the present disclosure.

Referring to FIG. 8 together with FIG. 7, the electrode lead 111 of the battery cell 100B according to another embodiment of the present disclosure may include a multi-bent portion K at which the electrode lead 111 disposed at the bending portion 125B is bent at least two times. The multi-bent portion K may be disposed at the bending portion 125B. For example, as shown in FIG. 8, the electrode lead 111 disposed at the bending portion 125B may include the multi-bent portion K formed by vertically bending five times. Additionally, the multi-bent portion K may be formed by vertically bending a part of the bending portion 125B five times along the bent structure.

According to this configuration of the present disclosure, the battery cell 100 of the present disclosure includes the multi-bent portion K formed by bending the electrode lead 111 disposed at the bending portion 125B at least two times, so it is possible to disperse stress caused by the bending of the bending portion 125B to the at least two bent regions, thereby increasing the durability of the electrode lead 111. Further, since the electrode lead 111 is already bent along the bent region of the bending portion 125B, it is possible to bend with a small force, and reduce deformation caused by bending.

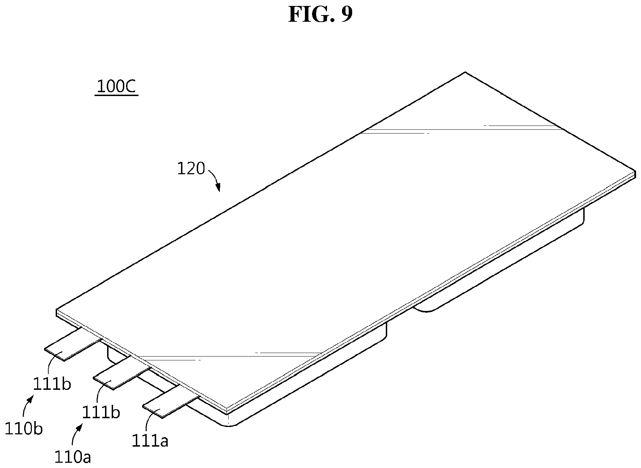

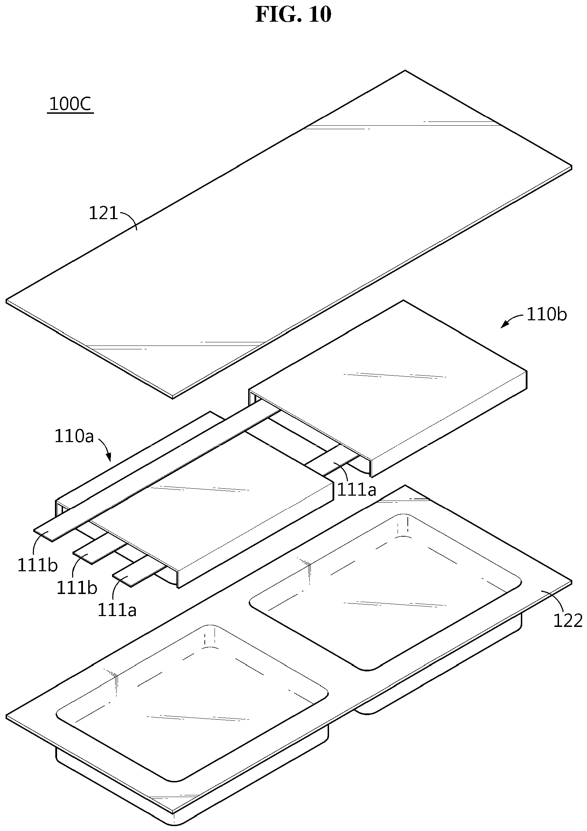

FIG. 9 is a schematic perspective view of the components of a battery cell according to another embodiment of the present disclosure. FIG. 10 is a schematic exploded perspective view of the components of the battery cell of FIG. 9.

Referring to FIGS. 9 and 10 together with FIG. 4, the battery cell 100C according to another embodiment may include at least two battery units 110a, 110b electrically connected in series. For example, as shown in FIGS. 9 and 10, one electrode lead 111 of the rear battery unit 110b may be inserted into the front battery unit 110a.

Additionally, the electrode lead 111 inserted into the battery unit 110a may be electrically connected to the electrode assembly 115 of the battery unit 110a. Additionally, the remaining electrode lead 111 may be configured to extend outward from the battery unit 110a and protrude outward from the outer pouch 120.

For example, as shown in FIGS. 4 and 10, the positive electrode lead 111a of the rear battery unit 110b may be connected to the negative electrode tab stack 115e provided in the electrode assembly 115 of the front battery unit 110a. Additionally, the negative electrode lead 111b of the rear battery unit 110b may extend outward from the front battery unit 110a and protrude outward from the front end of the outer pouch 120.

Additionally, both the positive electrode lead 111a and the negative electrode lead 111b of the battery unit 110a may protrude outward from the outer pouch 120. For example, as shown in FIG. 9, both the positive electrode lead 111a and the negative electrode lead 111b of the front battery unit 110a may protrude outward from the front end of the outer pouch 120.

Further, one of the positive electrode lead 111a and the negative electrode lead 111b of the battery unit 110a electrically connected to the battery unit 110b may be configured to sense the voltage of the battery unit 110b. Here, electrically connected refers to connection between the electrode plate of the electrode assembly 115 connected to the electrode lead 111 of the battery unit 110a and the electrode lead of the battery unit 110b through the electrode tab.

For example, as shown in FIG. 10, both the positive electrode lead 111a and the negative electrode lead 111b of the front battery unit 110a may protrude outward from the outer pouch 120. Among the positive electrode lead 111a and the negative electrode lead 111b of the front battery unit 110a, the negative electrode lead 111b electrically connected to the positive electrode lead 111a of the rear battery unit 110b may be configured to sense the voltage of the rear battery unit 110b. That is, the voltage of the rear battery unit 110b may be measured by sensing the current of each of the negative electrode lead 111b of the rear battery unit 110b and the negative electrode lead 111b of the front battery unit 110a.

According to this configuration of the present disclosure, the battery cell 100C of the present disclosure may be configured to sense the voltage of each of the battery units 110a, 110b, thereby efficiently managing the stability and life of the battery cell 100C.

Meanwhile, referring back to FIGS. 9 and 10, the electrode leads 111 protruding outward from the outer pouch 120 of each of the at least two battery units 110a, 110b may be arranged side by side. For example, as shown in FIG. 9, the positive electrode lead 111a and the negative electrode lead 111b of the front battery unit 110a may be disposed at the front end of the outer pouch 120, and the negative electrode lead 111b of the rear battery unit 110b may be disposed at the front end of the outer pouch 120. That is, the positive electrode lead 111a and the negative electrode lead 111b of the front battery unit 110a and the negative electrode lead 111b of the rear battery unit 110b may be arranged side by side in the horizontal direction.

According to this configuration of the present disclosure, the battery cell 100C of the present disclosure includes the electrode leads 111 protruding outward from the outer pouch 120 of each of the at least two battery units 110a, 110b arranged side by side, and thus in the case of an electronic device including a plurality of battery units separated according to the conventional art, the locations of the electrode leads of each of the plurality of battery units may be different, requiring the number of protection circuit modules corresponding to the number of battery units, while the battery cell of the present disclosure may electrically connect the plurality of battery units 110a, 110b with one protection circuit module 1120.

Accordingly, the present disclosure does not need to have a plurality of protection circuit modules, thereby reducing the manufacturing cost. Further, the battery cell 100C of the present disclosure may use one protection circuit module 1120, resulting in high utility of the internal space of the electronic device, which makes it easy to apply a larger capacity battery cell 100C.

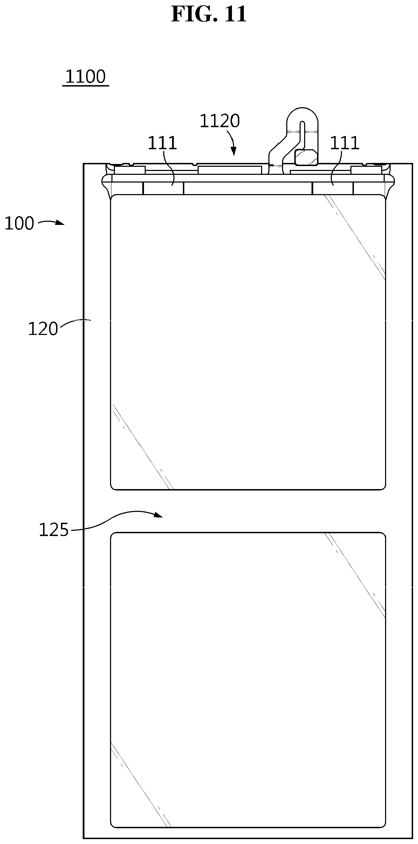

FIG. 11 is a schematic bottom view of a battery pack according to an embodiment of the present disclosure.

Referring to FIG. 11, the battery pack 1100 of the present disclosure includes at least one battery cell 100 and a protection circuit module 1120. Here, the protection circuit module 1120 may be electrically connected to the at least one battery cell 100. The protection circuit module 1120 may include, for example, a printed circuit board (PCB) substrate having an electrical circuit to control the charge/discharge of the battery cell 100. In the battery cell 100, each of the electrode leads 111 drawn from the outer pouch 120 may be connected to the protection circuit module 1120.

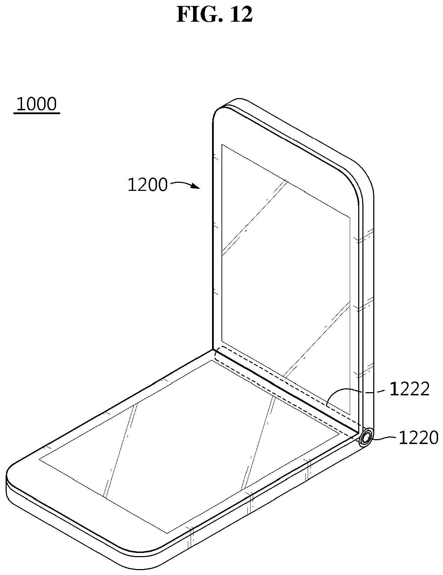

FIG. 12 is a schematic perspective view of an electronic device according to an embodiment of the present disclosure.

Referring to FIG. 12 together with FIG. 11, the electronic device 1000 according to an embodiment of the present disclosure includes at least one battery pack 1100. For example, the electronic device 1000 may be a smartphone, a mobile or a laptop computer. The electronic device 1000 may include an outer case 1200 having a receiving space for receiving the battery pack 1100. The outer case 1200 may be configured to bend along the bending portion 125. For example, the outer case 1200 may include a hinge portion 1220. The hinge portion 1220 may have a rotation axis 1222 around which the outer case 1200 bends.

Additionally, the hinge portion 1220 may be provided at a location corresponding to the bending portion 125. The rotation axis 1222 of the hinge portion 1220 may be disposed at the bent structure (B shown in FIG. 7) of the outer case 1200 bent at least two times. That is, in other words, the rotation axis 1222 may be inserted and disposed in an empty space between the at least two bends of the bending structure B. Accordingly, it is possible to realize the electronic device 1000 with a more compact design.

Meanwhile, the terms indicating directions as used herein such as upper, lower, left, right, front and rear are used for convenience of description only, and it is obvious to those skilled in the art that the term may change depending on the position of the stated element or an observer.

While the present disclosure has been hereinabove described with regard to a limited number of embodiments and drawings, the present disclosure is not limited thereto and it is obvious to those skilled in the art that various modifications and changes may be made thereto within the technical aspects of the present disclosure and the equivalent scope of the appended claims.

## Claims

1. A battery cell, comprising:
at least two battery units, each including a plurality of electrode leads, an electrode assembly, an electrolyte solution and an inner pouch in which the electrode assembly and the electrolyte solution are received, wherein at least one of the plurality of electrode leads of one battery unit is inserted into the other battery unit and electrically connected to the electrode assembly; and
an outer pouch including at least two receiving portions in which the at least two battery units are received respectively, and a bending portion in which a part of the plurality of electrode leads is disposed and a part between the at least two receiving portions is bent.

2. The battery cell according to claim 1, wherein the bending portion has a sealing region in which at least part of the bending portion is sealed, and
the bending portion is configured to bend at the sealing region.

3. The battery cell according to claim 2, wherein the bending portion has a non-sealing region not sealed from one end of the outer pouch to the other end, and
the non-sealing region is configured to bend.

4. The battery cell according to claim 3, wherein the sealing region or the non-sealing region of the bending portion has a bending structure bent at least two times.

5. The battery cell according to claim 4, wherein the electrode lead disposed at the bending portion includes a multi-bent portions bent at least two times.

6. The battery cell according to claim 1, wherein the plurality of electrode leads includes a positive electrode lead and a negative electrode lead,
any one of the positive electrode lead and the negative electrode lead of one battery unit is electrically connected to any one of the positive electrode and the negative electrode of the other battery unit, and the remaining one extends outward from the other battery unit and protrudes outward from the outer pouch,
both the positive electrode lead and the negative electrode lead of the other battery unit protrude outward from the outer pouch, and
one of the positive electrode lead and the negative electrode lead of the other battery unit is configured to sense a voltage of one battery unit.

7. The battery cell according to claim 1, wherein the electrode leads protruding outward from the outer pouch of each of the at least two battery units are arranged side by side.

8. A battery pack comprising at least one battery cell according to any one of claims 1 to 7, wherein the battery pack further comprises a protection circuit module electrically connected to the at least one battery cell.

9. An electronic device comprising at least one battery pack according to claim 8.

10. The electronic device according to claim 9, further comprising:
an outer case to accommodate the battery pack and configured to bend along the bending portion.
